Europäisches Patentamt

European Patent Office

Office européen des brevets

(19)

(11) Publication number: **0 093 214**

**A1**

(12) # EUROPEAN PATENT APPLICATION

(21) Application number: **82302283.5**

(22) Date of filing: **05.05.82**

(51) Int. Cl.³: **G 05 D 23/24**
**H 02 J 7/02**

(43) Date of publication of application:
**09.11.83  Bulletin  83/45**

(84) Designated Contracting States:
**BE CH DE FR GB LI LU NL SE**

(71) Applicant: **HONEYWELL INC.**
**Honeywell Plaza**
**Minneapolis Minnesota 55408(US)**

(72) Inventor: **Kompelien, Arlon D.**
**6329 Thomas Avenue South**
**Richfield Minnesota 55423(US)**

(74) Representative: **Harman, Michael Godfrey  et al,**
**Honeywell Control Systems Ltd. Charles Square**
**Bracknell Berkshire RG12 1EB(GB)**

(54) **Power supply circuitry in 2-wire thermostats.**

(57) A 2-wire thermostat is connected across a power source T1 and a load L. A sensing and signal processing circuit SSP, powered by a battery B1, opens and closes a switch S2 to de-energize and energize the load. The battery B1 is charged from the secondary T2S of a transformer T2. With S2 open, current flows through a large primary winding T2P1 of T2 (and through the small primary winding T2P2), down and up on successive half-cycles from T1, so energizing T2S. As the initial part of each half-cycle provides an appropriate charge for B1, the output of a comparator COMP changes to open switch S1A or S2A to terminate current flow for the latter portions of the half-cycles. Dissipation and heating of the thermostat is therefore minimized. With S2 closed, a heavy current flows through the small primary winding T2P2 so energizing T2S, but winding T2P1 now acts as a secondary and is energized in reverse. Switches S1A and S2A therefore allow current flow in T2P1, under control of COMP, in the latter portions of successive half-cycles. This current flow in T2P1 is a short-circuited loop flow, and therefore prevents power transmission through T2 to the battery B1 except during the initial portions of the half-cycles.

./...

FIG.1

POWER SUPPLY CIRCUITRY IN 2-WIRE THERMOSTATS

The present invention relates to 2-wire thermostats, and more specifically to means for maintaining internal power supplies therein charged.

Two-wire thermostats are well known. The simplest possible form is a mere temperature-controlled mechanical contact pair, which opens and closes in dependence on temperature. This is connected in series with a power source, e.g., the mains or a low voltage supply, and a load. The load will normally be the control unit of a boiler or other heating device, which is thus turned on and off by the thermostat.

In practice, such thermostats include various electronic circuitry, including a sensing and signal processing circuit, and a switch (mechanical or electronic) controlled thereby and connected across the input lines and performing the function of the mechanical contact pair mentioned above. The electronic circuitry requires a power supply to energize it, and the power supply in turn requires a charging circuit which is energized from the supply or input line pair to the thermostat. The power supply must be kept charged whether the switch is open or closed.

Various techniques have been developed for achieving this. Since the power supply must provide a reasonably well regulated voltage to the sensing and signal processing circuitry, either the power supply itself must contain regulating circuitry or the charging circuit must limit the charging of the power supply to roughly the amount of power being used. This has been achieved in the past by such means as strings of limiting diodes and voltage drop regulating transistors. This results in appreciable power dissipation, which makes the thermal design of the thermostat for good temperature control difficult.

The main object of the present invention is therefore to provide, in a 2-wire thermostat, power supply arrangements which minimize power dissipation.

Accordingly the present invention provides a 2-wire thermostat comprising:

a sensing and signal processing circuit controlling a switch across the input lines;

a power supply energizing the sensing and signal processing circuit; and

a charging circuit energized from the input lines for charging the power supply,

<u>characterized by</u> a transformer having a secondary winding coupled to the charging circuit, a small primary winding connected in series with the switch, and a large primary winding connected in parallel with the switch;

switching circuitry connected in series with the large primary winding across the switch; and

control means responsive to the charging of the power supply to control the switching circuitry on successive half-cycles on the input lines to allow current flow through the large primary winding at the initial portions of the half-cycles when the switch is open and at the final portions when the switch is closed.

It will be realized that, by using control means which switch between the one and off states, the power dissipation in the thermostat will be minimized.

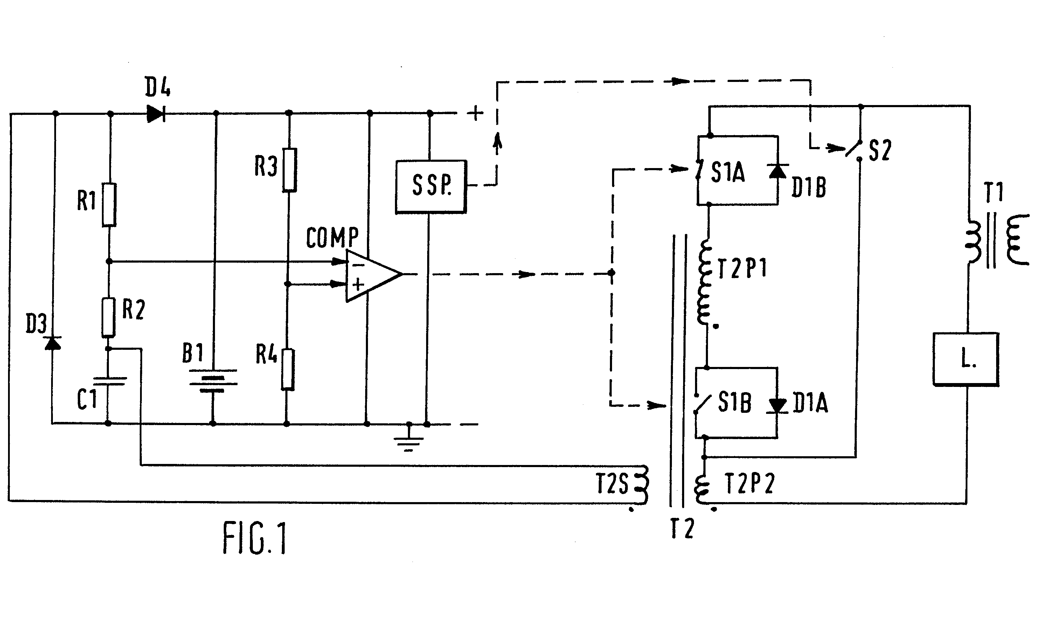

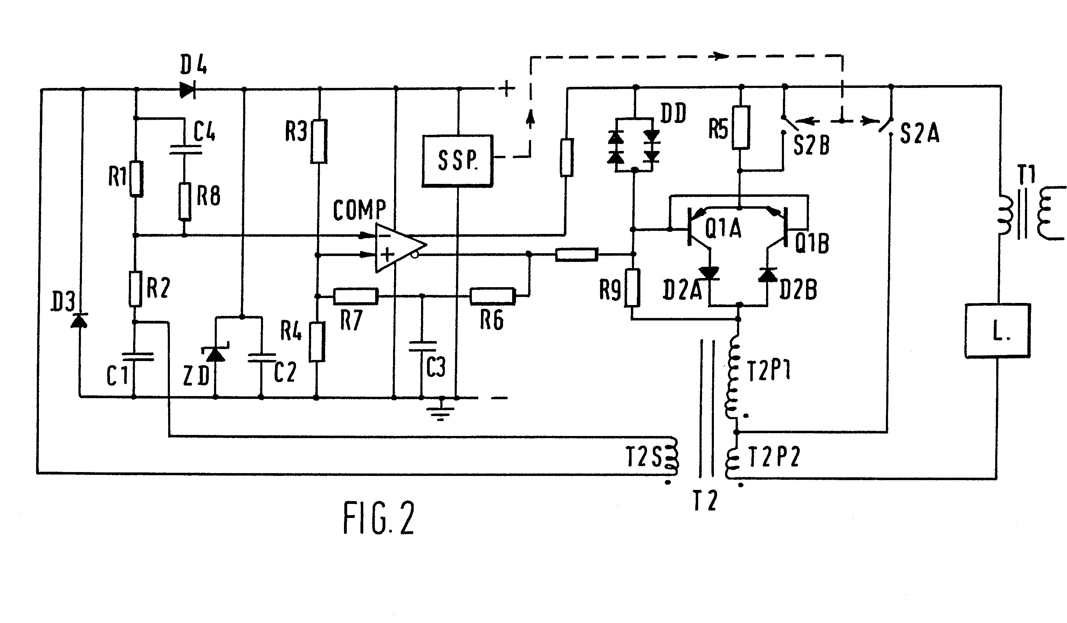

Two thermostats in accordance with the invention will now be described, by way of example, with reference to the drawings, in which Figures 1 and 2 are circuit diagrams of control systems including the two thermostats.

Referring to Figure 1, the system consists of a mains energized transformer T1, and load L, and the thermostat circuit. Ther thermostat circuit includes a sensing and signal processing circuit SSP the basic function of which is to sense the temperature. When the temperature is below a set point, the thermostat circuit draws only a small trickle current, and although this trickle current flows through the load L it is too small to energize the load. When the temperature rises above the set point, the circuit SSP produces

an output signal which increases the current drawn by the thermostat to a high value, this current passing through the load L and energizing it. The circuit SSP is powered by means of a battery B1. The thermostat circuitry shown thus has two functions; to switch between the low trickle current and the high current under the control of the circuit SSP, and to maintain the battery B1 charged in both states of the circuit SSP output while minimizing the dissipation in the thermostat.

Power is transmitted to the battery B1 via a transformer T2, and the circuitry can be considered in three stages: the way in which the transformer T2 is energized, the way in which the battery B1 is charged from the transformer, and the way in which the energization of the transformer is controlled. There are two different conditions to be considered, depending on whether the thermostat is off (drawing only a trickle current) or on (drawing a large current and energizing the load L).

The transformer T2 is energized, when the thermostat is off, by means of a first primary winding T2P1. This is, as shown, connected in series with two control circuits, the first consisting of a switch S1A and a diode D1B in parallel and the second consisting of a switch S1B and a diode D1A in parallel. This series combination is connected between the power supply transformer T1 and the load L as shown. A second primary winding T2P2 of transformer T2 is connected in series with this series combination, as shown, but has little effect when the thermostat is off, and can be regarded as merely increasing slightly the size of the first primary winding T2P1. The winding T2P1 is large (i.e. has many turns) so that, when energized from the power supply transformer T1, it allows only a trickle current to flow.

The two switches S1A and S1B are controlled by a comparator COMP, such that they are in opposite states. During a positive half-cycle (when the top end of the secondary of transformer T1 is positive), winding T2P1 is energized when switch S1A is closed, current flowing via that switch and diode D1A. During a negative half-cycle, the winding is energized when switch S1B is closed, current flowing via that switch and diode D1B. The switches are shown in the positions for a 1 or high output from the comparator COMP. As will be seen later, the comparator output is 1 at the start of a positive half-cycle, changes to 0 or low during the half-cycle, and changes back to 1 during the following negative half-cycle. Hence the transformer T2 is energized by means of winding T2P1, at the start of a positive half-cycle, becomes de-energized during the half-cycle, is energized at the start of the following negative half-cycle, and becomes de-energized during that half-cycle.

This results in a small trickle current flowing, during the initial parts of the half-cycles when the transformer T2 is energized. During the remaining parts of the half-cycles, no current flows.

The resulting energizations of the transformer T2, at the beginning of each half-cycle, act to maintain the battery B1 charged. The transformer T2 has a secondary winding T2S which is coupled to the battery B1 via a capacitor C1 and two diodes D3 and D4 as shown. Consider first a positive half-cycle. This will result in the upper, non-dotted, end of secondary T2S going positive, and current will flow from that end through capacitor C1 and diode D3 back to the lower, dotted end of winding T2S. This will result in capacitor C1 being charged with its upper side positive. The following half-cycle is a negative half-cycle, and current will flow from the lower, dotted end of winding T2S through diode D4 into the battery B1, the current path being completed through capacitor C1 to the upper end of winding T2S. It will be noted that the positive charge put on capacitor C1 during the positive half-cycle acts to aid the winding T2S in charging the battery during the following negative half-cycle.

The comparator COMP, which controls the energization of the transformer T2, is controlled by the charging of the battery B1 by means of two voltage dividers R1-R2 and R3-R4 connected as shown. The voltage divider R3-R4 is connected across the battery B1 and supplies a steady reference voltage to the comparator. The voltage divider R1-R2 is connected between the upper side of capacitor C1 and the junction of diodes D3 and D4, and is responsive to the varying charging voltages. In the positive half-cycle, the capacitor C1 starts at a low charge, and the voltage on its upper side rises as it charges. Thus initially the negative input (from R1-R2) to the comparator COMP is low compared to the positive input (from R3-R4), and the comparator produces a 1. However, when the voltage on C1 rises high enough, the negative input to the comparator will exceed the positive input, and its output will change to 0, thus terminating the energization of transformer T2 for that half-cycle. On the following negative half-cycle, since the voltage applied to the top end of R1 is now positive, the voltage fed to the comparator from R1-R2 increases, and some discharge of capacitor C1 is required before the negative input to the comparator falls below the positive input. This will occur when the voltage on capacitor C1 falls sufficiently, whereupon the comparator output will change back to 1, thus terminating the energization of transformer T2 for that negative half-cycle.

The system will continue to run as described on following cycles, operating first to build up voltage on capacitor C1 and then to put a charging pulse on battery B1, thereby maintaining the battery voltage. The battery B1 provides power to the comparator COMP and to the sensing and signal processing circuitry SSP.

Consider now the second condition, when the thermostat is on. This means that the sensing and signal processing circuitry SSP, which controls a switch S2, is producing a 1 (high) output which closes switch S2. This results in the supply voltage from T1 being applied to the load L via only the second primary winding T2P2 of transformer T2, and since this winding is small (relatively few turns), a large current flows, energizing the load L.

This alone would result in a continuous transmission of power through the transformer T2 to the battery charging circuitry; that is, the full length of each half-cycle would be used for charging the battery. The small size of winding T2P2 compared with winding T2P1 would be compensated for by the greater current which flows through T2P2 alone compared with that through T2P1 and T2P2 in series.

However, the winding T2P1 and its associated control devices S1A, S1B, D1A, and D1B operate, in a somewhat different manner in this condition (thermostat on), to control the charging of the battery B1. The comparator COMP operates exactly as before, producing a 1 at the start of a positive half-cycle, the output changing to 0 part-way through the positive half-cycle and changing back to 1 part-way through the following negative half-cycle. The winding T2P1 and its associated control devices are now, however, shorted by the switch S2, so there is no direct drive to this winding from the supply transformer T1. Instead, the winding T2P1 is energized by transformer action from the transformer T2 which is energized by winding T2P2 acting as the primary winding, so that winding T2P1 now acts somewhat as a secondary winding. The induced voltage in this winding T2P1 will be the same as the voltage from the supply transformer T1, but the current flow (if a current path is available) will be in the opposite direction to the flow which occurred during the first condition (thermostat off).

Accordingly, during a positive half-cycle, with the comparator COMP output at 1 at the beginning of the half-cycle, switch S1B will be open (in the position shown), and no current will flow in winding T2P1. However, when the comparator COMP output changes to 0, switch S1B will close and current will flow. Similarly, at the start of the negative half-cycle, switch S1A will be open, so no current will flow in winding T2P1, but when the comparator output changes back to 1, switch S1A will close and current will flow.

This means that current flows in the winding T2P1, in the second condition (thermostat on), during exactly those parts of the half-cycles when it would not flow during the first condition (thermostat off). But with the thermostat on (second condition), power passes to the battery charging circuitry via the large current through winding T2P2. When current flows in the winding T2P1, this current flows through the closed switch S2, which constitutes a short circuit across the winding T2P1 and its control devices. Thus this winding acts, when current flows in it, as a short-circuited winding, and therefore greatly reduces the power transmission through transformer T2, from winding T2P2 to winding T2S and thence to the battery charging circuitry.

Thus in the second condition, thermostat on, the operation of battery charging is substantially identical to that in the first condition, thermostat off. This results from the reversal of the current flow timing through the winding T2P1 combined with the change between that winding causing and inhibiting power flow through transformer T2. With the thermostat on, second condition, current flow through the winding T2P1, as a result of it reducing power flow through the transformer, marginally increases the current through the winding T2P2.

In certain circumstances, the battery can be replaced by a capacitor and zener diode combination. Also the switches S1A and S1B have to have a response time which is short compared to the period of a supply cycle. (This is in contrast to the switch S2, which can be a latching relay to minimize power dissipation.) It is therefore desirable to use solid state switches. Figure 2 shows a circuit with these and certain other changes made.

Looking first at the primary winding T2P1 of transformer T2, the control elements for this have all been placed at the upper end of the winding, and the switches replaced by transistors, so that this winding is now controlled by two transistors (of opposite types) Q1A and Q1B and two series diodes D2A and D2B as shown, instead of the switches and diodes S1A and S1B, D1A and D1B. As a result, the two primary windings T2P1 and T2P2 are now connected directly together, and switch S2A (corresponding to S2, Figure 1) is connected to their junction.

The bases of transistors Q1A and Q1B are connected together and fed from the comparator COMP, which has a pair of complementary outputs with the other output being connected to the supply line from T1 to provide a return path for the control signal to the two transistors. In addition, a voltage limiting circuit DD, comprising 4 diodes connected as shown, is connected between the supply line from T1 and the bases of the transistors and a resistor R9 is connected between the bases of the transistors and the top end of winding T2P1. The battery B1 of Figure 1 circuit has been replaced by a capacitor C2 and zener diode ZD. This means that the circuit will have no power supply voltage for the left-hand side at initial switching on, and the comparator COMP will not be able to turn the transistors on. The voltage limiting circuit DD and resistor R9 provide a base bias to the transistors which is sufficient to turn on whichever is properly poled for the current half-cycle from transformer T1. Hence the system will be able to start charging the capacitor C2, and when that capacitor has sufficient charge, the comparator COMP will be able to take over the control of the transistors. This initial turning on of the transistors will occur provided the switch S2A is open. If switch S2A is closed, then initially the transistors will not be able to turn on, and charging of C1 by means of the high current through winding T2P2 will take place until it is sufficiently charged for the comparator COMP to start operating.

It has been found desirable to limit the current through the load L when the thermostat is off. Resistor R5 effects this. As the current through the winding T2P1 rises, so the voltage drop across resistor R5 rises. The control voltage to the transistors Q1A and Q1B is limited by the voltage limiting circuit DD, and when the voltage drop across R5 approaches this limiting voltage, the current through whichever of transistors Q1A and Q1B is on will automatically be limited by the transistor being driven towards off. This limiting is undesirable when the thermostat is on and winding T2P1 is being short-circuited by the transistors, so the sensing and signal processing circuit SSP controls a second switch S2B which shorts out resistor R5 when the thermostat is on.

Resistor R1 in the charging circuitry for the capacitor C2 is shunted by a capacitor C4 and a resistor R8 in series. This series circuit reflects the change of voltage from the bottom end of winding T2S to the negative input of the comparator COMP at the beginning of a half-cycle to cause the comparator output to change state if there is insufficient change in voltage on capacitor C2 during the previous half-cycle to change its state. This could happen with a relatively high impedance AC load L.

Another pupose of this series circuit R8-C4 is to offset false signals which may occur on capacitor C1 when this capacitor has a high resistance (as may happen due to dissipation in typical electrolytic capacitors). During charge or discharge of capacitor C1 the voltage component of the series dissipation resistance makes the capacitor voltage change appear greater than it actually is. This would normally cause the comparator to switch earlier than it should. With resistor R8 and capacitor C4 providing a larger bias signal at the early part of each half-cycle than near the end, a larger signal change is required at the junction of C1 and R2 at the early part of each half-cycle to switch the comparator at this time if such a capacitor charging signal occurs. This helps compensate for the case of high load currents, which cause larger false error signals across the series dissipation resistance of capacitor C1 early in each half-cycle. The extra bias that must be overcome early in each half-cycle delays switching of the capacitor for high load currents to allow the true capacitance charge voltage to reach a more accurate regulated value under this condition.

The operation as described so far assumes a relatively balanced load condition. A problem may be encountered when the thermostat is on if the load L operated has an unbalanced impedance between one polarity of the supply and the other. One effect of such a load is to produce a supply current which is unequal in magnitude for the positive and negative half-cycles. For example, some loads may produce an output current wave form which rises only a small amount in the positive direction, but a large amount in the negative direction. When this occurs with sufficient imbalance the comparator output may not switch at the proper time. In some cases, the unbalance occurs in such a direction that it limits the effect of the charging capacitor C1 during the low current or positive half-cycle of the load. Because of this the voltage from the capacitor C1 may be insufficient, when added to the signal from the transformer winding T2S at the beginning of the negative half-cycle, to change the comparator state. The basic cause is that the magnetic flux of transformer T2 is driven so far from the zero position in one direction that the energy transfer between windings becomes ineffective.

With such an unbalanced load with the current being, for example, greater during the negative half-cycle than during the positive half-cycle, there will be a smaller amount of current in winding T2S during the positive half-cycle, thereby taking a longer time for capacitor C1 to charge to a point where the voltage at the negative input of comparator COMP is above that of the positive input. The result of this is that the output of comparator COMP will take longer to change during the positive half-cycle than during the negative half-cycle. The state will change near the end of the positive half-cycle and will change shortly after the beginning of the negative half-cycle. This has the effect of shorting winding T2P1 for a shorter period of time during the positive half-cycle than during the negative half-cycle. Since the volts per turn are about equal in magnitude for both half cycles and since the flux in the transformer is a function of the integral of the transformer's volts per turn with time, flux builds up more on the positive half-cycle due to the longer time it is unshorted than on the negative half-cycle, and the system rapidly reaches the point where the transformer magnetic flux becomes saturated. Thereafter capacitor C1 is incapable of reaching a value sufficient to cause the comparator COMP to change state, and the circuit malfunctions.

To overcome this problem, the feedback circuit of resistors R6 and R7 and capacitor C3 is provided around the comparator COMP as shown. Basically, the feed-back signal responds to the unbalanced condition to maintain a suitable transformer flux balance. More particularly, the feed-back circuit filters the signal so that the average value of voltage at the positive terminal of comparator COMP is decreased with the described unbalanced condition. Capacitor C1 does not then have to charge as high on the positive half-cycle, thereby reducing the volts per turn and the flux change during positive half-cycle. Also, during the negative half-cycle the volts per turn is larger because there is less aid from capacitor C1. Therefore the integral of volts per turn with time is about equal for both half-cycles and flux build up is eliminated while proper operation is provided. A similar operation would occur if the unbalance were in the opposite direction.

CLAIMS

1. A 2-wire thermostat comprising:

   a sensing and signal processing circuit (SSP) controlling a switch (S2) across the input lines (from T1, L);
   a power supply (B1; C2, ZD) energizing the sensing and signal processing circuit; and
   a charging circuit (C1, D3, D4) energized from the input lines for charging the power supply,
   characterized by
   a transformer (T2) having a secondary winding (T2S) coupled to the charging circuit, a small primary winding (T2P2) connected in series with the switch (S2), and a large primary winding (T2P1) connected in parallel with the switch (S2);
   switching circuitry (S1A, S1B, D1A, D1B; Q1A, Q1B, D2A, D2B) connected in series with the large primary winding across the switch (S2); and
   control means (COMP) responsive to the charging of the power supply to control the switching circuitry on successive half-cycles on the input lines to allow current flow through the large primary winding at the initial portions of the half-cycles when the switch (S2) is open and at the final portions when the switch (S2) is closed.

2. A thermostat according to Claim 1, characterized in that the charging circuit comprises a first diode (D4) and a capacitor (C1) connected in series with the power supply (B1) connected between them, and a second diode (D3) connected across the first diode (D4) and power supply and poled to conduct when the first diode is non-conductive.

3. A thermostat according to Claim 2, characterized in that the control means (COMP) is responsive to the voltage from a voltage divider (R1, R2) connected across the capacitor and second diode.

4.   A thermostat according to Claim 3, characterized in
     that the voltage divider (R1, R2) has a series resistor-capacitor circuit (R8, C4) connected across the
     resistor (R1) connected to the second diode.

5.   A thermostat according to any one of Claims 2 to 4,
     characterized in that the control means (COMP) comprises a comparator having resistor-capacitor negative
     feed-back (R6, R7, C3).

6.   A thermostat according to any previous Claim, characterized in that the switching circuitry comprises a pair
     of series-connected switches (S1A, S1B) each with a
     diode (D1B, D1A) connected across it.

7.   A thermostat according to any one of Claims 1 to 5,
     characterized in that the switching circuitry comprises
     a pair of transistors (Q1A, Q1B) of opposite types
     connected in parallel.

8.   A thermostat according to Claim 7, characterized in
     that each transistor has a diode (D2A, D2B) connected
     in series with it.

9.   A thermostat according to either of Claims 7 and 8,
     characterized by current limiting circuitry (R5, DD)
     connected to the transistors.

FIG.1

1/2

00093214

FIG.2

2/2

0093214

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | G 05 D 23/24 |
| A | US-A-4 249 696 (D.DONNELLY) *Column 3, line 26 to column 4, line 46; figure* | 1 | H 02 J 7/02 |
| | --- | | |
| A | DE-A-2 922 161 (HONEYWELL) | | |
| | --- | | |
| A | US-A-3 784 843 (C.GUSTUS) | | |
| | --- | | |
| A | US-A-4 328 528 (A.KOMPELIEN) | | |
| | ----- | | |

TECHNICAL FIELDS SEARCHED (Int. Cl. ³)

G 05 D
H 02 J

The present search report has been drawn up for all claims

| Place of search THE HAGUE | Date of completion of the search 11-01-1983 | Examiner HELOT H.V. |
|---|---|---|